# EUROPEAN PATENT APPLICATION

(11) **EP 4 036 938 A1**
(43) Date of publication of application: **03.08.2022**
(21) Application number: 21305134.5
(22) Date of filing: 01.02.2021
(51) Int. Cl.: H01B 7/04, H01B 7/00, H01B 7/14, F16L 11/20, F16L 13/02, F16L 9/02, F16L 9/14, F16L 11/127, F16L 11/22, F16L 58/08, B21C 37/15, H01B 7/28

(54) **SUBSEA COMPOSITE ASSEMBLY FOR TRANSPORTATION OF HYDROGEN IN A BI-METALLIC TUBE**

(71) Applicant: Nexans, 92400 Courbevoie (FR)
(72) Inventor: LARSEN, Magnus Hurlen, 1782 HALDEN (NO); JOHANSON, Audun, 0653 OSLO (NO)
(74) Representative: Ipsilon

(57) **Abstract**

The present invention relates to a composite assembly comprising at least one cable and at least one bimetallic tube. The bimetallic tube has an outer tube of duplex stainless steel having high mechanical strength to resist pressure containment and fatigue while also being corrosion resistant towards seawater. Further, the bimetallic tube has an inner tube for transportation of hydrogen comprising an iron based austenitic alloy that is resistant to hydrogen embrittlement and has satisfying mechanical strength properties for its purpose of transporting hydrogen.

## Description

### FIELD OF THE INVENTION:

The present invention relates to a subsea composite assembly comprising a bimetallic tube for transportation of hydrogen therein and a cable for transportation of signals or electrical current. The invention also relates to a system comprising the composite assembly.

### BACKGROUND

A subsea umbilical, which may be considered as a subsea composite assembly, is, as the analogy to the umbilical cord implies, a cable which transports required consumables between a source and recipient. The umbilical cable is typically an arrangement of cables and conduits enclosed in an over-sheath and may transport chemical compounds, hydraulic power, electric power and/or digital data in its cables and/or conduits. Subsea umbilicals are mainly known for their use in offshore production of hydrocarbons.

Subsea umbilicals are often subjected to various mechanical loading including external hydrostatic water pressure, internal pressure according to the substance it transfers, bending and tensioning during manufacture and installation and dynamic flexing for long periods of time. This requiring excellent mechanical strength, ductility and fatigue properties especially of the over-sheath material, but also for the cables and conduits therein.

Recent years demand for environmentally friendly energy has set focus on inter alia the utilization of hydrogen which is believed to play a vital role in the decarbonisation of the economy to meet the targets of the Paris Agreement. Hence, research has been made for offshore production and/or storage of hydrogen which can be used for delivering hydrogen to for example the maritime sector.

It is however a challenge to provide tubes for transportation of hydrogen. Such tubes must be resistant to hydrogen embrittlement. Further, if the tubes are to be arranged within a subsea umbilical, they must further have a high mechanical strength to withstand the subsea environment and must be corrosion resistant with regard to sea water.

Duplex steel comprising 25 wt% chromium, so-called 25Cr-duplex, is a material often used in subsea tubes due to its excellent mechanical properties and corrosion resistance. However, it is well known that 25Cr-duplex may be susceptible to embrittlement under the influence of hydrogen. The problem is mostly known for atomic hydrogen and seem also to extend to molecular hydrogen under high pressure and temperature.

It does however exist tubes for transportation of hydrogen such as for example tubes of austenitic stainless steels resistant to hydrogen embrittlement. However, such tubes of austenitic stainless steels must have a high nickel content to have satisfactory corrosion resistant properties and are hence very expensive for subsea use. Further, their mediocre mechanical properties would lead to the use of thick and heavy tube walls to obtain satisfying mechanical properties which further increases the cost.

An object of the present invention is therefor to provide a subsea composite assembly having a tube for transportation of hydrogen having sufficient high strength and resistance to hydrogen embrittlement.

It is also an object of the present invention that the tube for transportation of hydrogen is cost efficient with regard to the choice of materials thereof.

### SUMMARY OF THE INVENTION

The present invention relates to a subsea composite assembly comprising at least one bimetallic tube and at least one cable.

The bimetallic tube is for transportation of liquid and/or gaseous hydrogen while the cable is for transportation of a signal or electrical current.

The subsea composite assembly may be a subsea umbilical or a subsea bundle.

The subsea umbilical may comprise the at least one bimetallic tube and the at least one cable arranged within an over-sheath of for example an outer polyethylene sheathing.

The subsea bundle may comprise the at least one bimetallic tube and the at least one cable bundled together. The bimetallic tube(s) and the cable(s) may be taped, wired or bound together.

The bimetallic tube arranged within the subsea composite assembly is exposed to sea water on the outside. Hence, the outer surface of the bimetallic tube must have high corrosion resistance properties. Further, the bimetallic tube is exposed to high pressures when transporting hydrogen within the bimetallic tube and hence a bimetallic tube of high mechanical strength is important. High mechanical strength decrease the necessary tube thickness for a given hydrogen pressure and tube diameter.

Further, as the inside i.e. inner surface, of the bimetallic tube is exposed to hydrogen, preferably high purity hydrogen, the inner surface of the bimetallic tube must be resistant to hydrogen embrittlement and be able to stop hydrogen permeating into the outer tube. Hence the inner tube serves to protect the outer tube from being exposed to hydrogen and therefore embrittlement. Austenitic steel is known to have a low permeability compared to super-duplex steel.

The bimetallic tube of the subsea composite assembly of the present invention provides such properties at a low cost.

The bimetallic tube comprises an outer and an inner tube. The outer tube comprises duplex stainless steel having high mechanical strength to resist pressure containment and fatigue while also being corrosion resistant towards seawater. The inner tube comprises an iron based austenitic alloy that is resistant to hydrogen embrittlement and has satisfying mechanical strength properties for its purpose of transporting hydrogen.

The inner tube may be fixed to the outer tube by metallic bonding. The method may involve adding the inner tube to the outer tube by explosive cladding, extrusion or by rolling.

In an example aspect the outer tube may comprise a duplex stainless steel comprising from 22 to 32 wt% Cr, or preferably from 25 to 31 wt% Cr. Such high content of chromium in the alloy allows for very high corrosion resistance of the outer tube.

Examples of such so-called super duplex stainless steels may be:

| UNS | Cr (wt%) | Ni (wt%) | Mo (wt%) | Mn (wt%) | N (wt%) | Si (wt%) | Cu (wt%) |
|---|---|---|---|---|---|---|---|
| S32750 | 24-26 | 6-8 | 3-5 | ≤1.2 | 0.24-0.32 | ≤0.8 | ≤0.5 |
| S32760 | 24-26 | 6-8 | 3-4 | ≤1.0 | ≤1.00 | ≤0.03 | 0.5-1.0 |

The amount of impurities in the alloys may be up to 0.15 wt%.

The remainder of the alloys is iron, which is the balance of the weight% (wt%) of the compositions.

The inner tube, being an iron based austenitic alloy, has a low diffusivity and high solubility to hydrogen, and hence a very thin layer will act as an impermeable hydrogen trap hindering hydrogen ingress into the outer tube of duplex stainless steel.

In an advantageous aspect, the iron based austenitic alloy may comprise at least one of nickel and manganese both contributing to the austenitic crystal structure. Nickel may be preferred for being more stable than manganese but being more expensive.

The austenitic alloy may further comprise chromium for increasing the hardenability of the inner tube material.

In one aspect, the austenitic alloy may comprise from 6 to 31 wt% Ni, preferably 8 to 15 wt % Ni.

In another aspect the austenitic alloy may comprise from 6 to 31 wt% Ni and 1 to 10 wt% Mn, preferably 10 to 14 wt% Ni, and more preferably 4 to 8 wt% Mn.

In another aspect the austenitic alloy may comprise from 2 to 20 wt% Mn, preferably 4 to 16 wt% Mn.

The inner tube of iron based austenitic alloy may selected from any one of:

| UNS | Cr | Ni | Mo | Mn | N | Si | C | V | Nb |
|---|---|---|---|---|---|---|---|---|---|
| S31603 | 16-18 | 10-14 | 2-3 | ≤2 | ≤0.1 | ≤0.75 | ≤0.03 | | |
| S20910 | 20.5-23.5 | 11.5-13.5 | 1.5-3.0 | 4-6 | 0.2-0.4 | ≤1 | ≤0.06 | 0.1-0.3 | 0.1-0.3 |
| S31254 | 19.5-20.5 | 17.5-18.5 | 6-6.5 | ≤1 | 0.18-0.25 | ≤0.8 | ≤0.02 | | |
| S20200 | 17-19 | 4-6 | | 7.5-10 | ≤0.25 | ≤1 | ≤0.15 | | |
| S21400 | 17-18.5 | ≤1 | | 14-16 | ≤0.35 | 0.3-1.0 | ≤0.12 | | |

As mentioned above, the inner tube may be a thin layer compared to the outer tube. In an aspect of the invention the outer tube may have a radial thickness from 1 to 15 mm. The inner tube may have a radial thickness from 0.2 to 3 mm.

Further, the radial thickness of the outer tube may be from 20 to 250% larger than the radial thickness of the inner tube.

The subsea composite assembly is intended to be used for transportation of hydrogen as well as providing other functions by having a cable therein which may be e.g. an electric cable, fiber optic cable or a signal cable. Hence the subsea composite assembly may transport electrical current, data- or control signals to and from a location as well as hydrogen.

For providing a subsea composite assembly of long length, the bimetallic tube may comprise multiple bimetallic sections. In one aspect, the bimetallic tube of the subsea composite assembly may comprise one or more welded joints of which each welded joint connects two bimetallic tube sections of the bimetallic tube together.

Hence, the bimetallic tube may comprise a first bimetallic tube section and a second bimetallic tube section and a welded joint therebetween. Preferably, the first and second bimetallic tube sections have the same or nearly the same inner and outer diameter.

The welded joint may be an orbital welded joint, gas tungsten arc welded (GTAW) joint or a gas metal arc welded (GMAW) joint. Preferably the welded joint is obtained by orbital welding. In welding such joints a filler material is used.

In one aspect the filler material may be reflecting the structure of the bimetallic tube sections having an inner filler string comprising an iron based austenitic alloy and an outer filler string comprising a duplex stainless steel. The welded joint hence reflects the bimetallic tube sections and progressively change from a pure austenitic grade to a duplex (ferrite + austenitic) grade string in the radial direction extending from the inner surface to the outer surface of the bimetallic tube.

Hence, the inner filler string welds the inner tubes of the two bimetallic tube sections together, while the outer filler string welds the outer tubes of the two bimetallic tubes together.

In another aspect the joint may comprise a filler material of nickel-based austenitic alloy.

In yet another aspect, the joint may comprise a filler material composition of 40 to 70 wt% Ni, 15 to 30 wt% Cr and 4 to 20 wt% Mo.

An example of such filler material is INCONEL^{®} Filler Metal 680 (FM680) having the following composition balanced with nickel:

| Ni | Cr | Fe | Mo | W | Nb | Ti | C |
|---|---|---|---|---|---|---|---|
| bal | 20.5 | 0.1 | 6.5 | 6.5 | 3.5 | 1.5 | 0.01 |

To strengthen the joint, the joint may further comprise additional material reinforcement of a root and/or cap. When the joint comprises the root, the bimetallic tube comprises a smaller inner diameter compared to the inner diameter of the bimetallic tube sections to be joined. When the joint comprises the cap, the bimetallic tube comprises a larger outer diameter compared to the outer diameter of the bimetallic tube sections to be joined.

The present invention is also related to a system for transportation of hydrogen and signals. The system comprises a subsea composite assembly having at least one cable for transportation of signals and at least one bimetallic tube for transportation of hydrogen. The bimetallic tube may be according to any aspects mentioned above comprising an outer tube of a duplex stainless steel and an inner tube of an iron based austenitic alloy. The system further comprises a hydrogen unit in fluid communication with the inner tube of the bimetallic tube.

The invention also relates to a method for joining the first and second bimetallic tube section by welding. The method may comprise the following steps:
- providing a first tube section having a first angled terminal end to be joined,
- providing a second tube section having a second angled terminal end to be joined being opposite/mirrored the first angled terminal end of the first tube section,
- arranging said angled terminal ends facing each other such that a groove is formed,
- providing a filler material in the form of a wire/string for filling said groove and
- welding the angled terminal ends.

Before joining, the first angled terminal end faces the second angled terminal end to form a groove with an included angle of about 20° to 60°. Thereafter the filler material fills the groove joining the two bimetallic tube sections together.

Other alternative methods for joining such bimetallic tubes can also be used, such as mechanical joining methods, for example autoclave fitting.

The joint may alternatively be a combined welded and mechanical joint.

The term "austenitic alloy" is herein defined as an alloy having a face-centered cubic crystal structure (FCC) where each cubical unit cell has one atom at each corner and one atom on each face of the cubical unit cell.

The term "iron based austenitic alloy" is herein defined as an alloy where the weight % of iron is higher than the weight % of each of the other elements in the alloy. Hence, the weight % of each element in the alloy cannot exceed the weight % of iron in the alloy.

The term "nickel-based austenitic alloy" is herein defined as an alloy where the weight % of nickel is higher than the weight % of each of the other elements in the alloy. Hence, the weight % of each element in the alloy cannot exceed the weight % of nickel in the alloy.

The term "subsea composite assembly" is herein defined as an assembly comprising at least one cable and at least one bimetallic tube therein which is suitable for being arranged subsea, i.e. at least a section of the assembly is arranged subsea during use. The subsea composite assembly may transport signals/current and hydrogen between two locations/facilities arranged above sea level wherein at least a section of the subsea composite assembly is arranged subsea. Alternatively, the subsea composite assembly may transport signals and hydrogen between one location/facility arranged above sea level and another location/facility arranged subsea. In a further alternative both locations/facilities can be arranged subsea and the subsea composite assembly therebetween.

The term "high purity hydrogen" is herein defined as a hydrogen composition comprising at least 99.5 mol% hydrogen, preferably greater than 99.98 mol% hydrogen.

All of the amounts recited herein are in weight % (wt%) unless stated otherwise.

### BRIEF DESCRIPTION OF DRAWINGS

Fig. 1A is a perspective cross sectional view along the radial direction of a subsea umbilical.
Fig. 1B is a perspective cross sectional view along the radial direction of a subsea bundle.
Fig. 2 is a cross sectional view along the radial direction of the bimetallic tube.
Fig. 3 is a cross sectional side view along the longitudinal direction of two bimetallic tube sections to be joined according to a first example embodiment.
Fig. 4 is a cross sectional side view along the longitudinal direction of the two bimetallic tube sections in Fig. 3 after being joined.
Fig. 5 is a cross sectional side view along the longitudinal direction of the two bimetallic tube sections in Fig. 3 after being joined.
Fig. 6A is a cross sectional side view along the longitudinal direction of two bimetallic tube sections to be joined according to a second example embodiment.
Fig. 6B is a cross sectional side view along the longitudinal direction of the two bimetallic tube sections in Fig. 6A after being joined.
Fig. 7A is a cross sectional side view along the longitudinal direction of two bimetallic tube sections to be joined according to a third example embodiment.
Fig. 7B is a cross sectional side view along the longitudinal direction of the two bimetallic tube sections in Fig. 7A after being joined.

### DETAILED DESCRIPTION

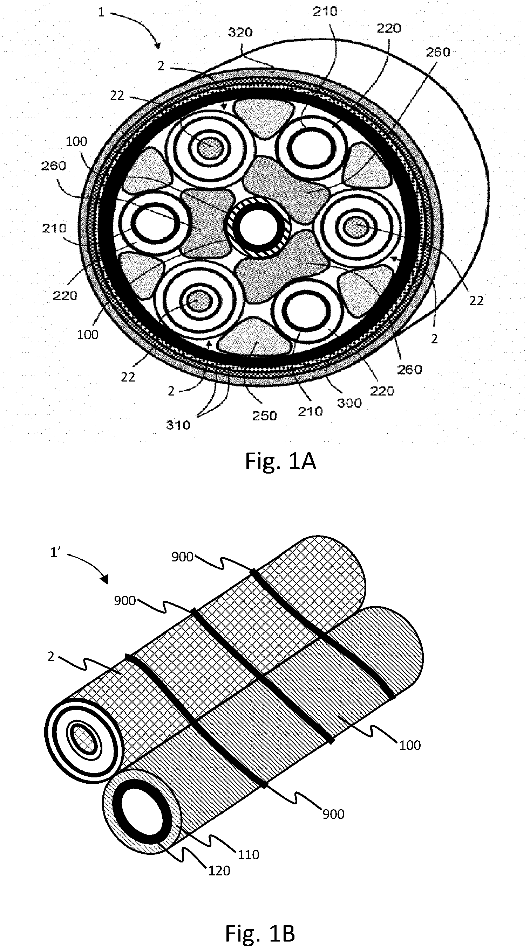

An example embodiment of composite assembly in the form of a subsea umbilical 1 for transporting electric power and hydrogen is presented in Fig. 1A.

The shown subsea umbilical 1 has three cables 2 shown as electrical cables 2, one centrally arranged bimetallic tube 100, and three peripheral tubes 210, 220 distributed and held in place by profile elements 250, 260 of polyethylene. These elements fill the inner space inside an over-sheath comprising an armouring 300,310 of steel wires and an outer polyethylene sheathing 320.

That the bimetallic tube 100 has a common central axis with the subsea umbilical 1.

The electric cables 2 have a polyethylene core element 22 having a layer of copper wires followed by a layer of semiconducting sheathing. These parts define the core of the conductor. Then follows a polymeric electric insulation layer, a semiconductive sheathing, a copper-wrapping, and an outer polymeric electric insulation.

In another example embodiment (not shown), the bimetallic tube may not be centrally arranged within the subsea umbilical. Further, the subsea umbilical may additionally or alternatively have one or several hydraulic tubes and/or optical fiber cables arranged therein.

Fig. 1B shows a composite assembly in form of a subsea bundle 1' where the bimetallic tube 100 and the cable 2 are bundled together by a wire 900.

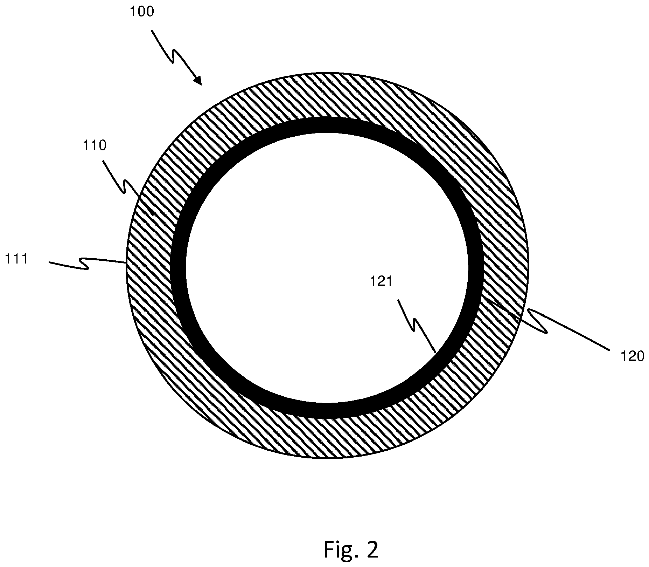

Fig. 2 shows the bimetallic tube 100 having an outer tube 110 and an inner tube 120 fixed together by metallic bonding.

The outer surface 111 of the bimetallic tube 100 which is a part of the outer tube 110 may be exposed to seawater and the inner surface 121 of the bimetallic tube 100 which is a part of the inner tube 120 may be exposed to hydrogen within the bimetallic tube 100.

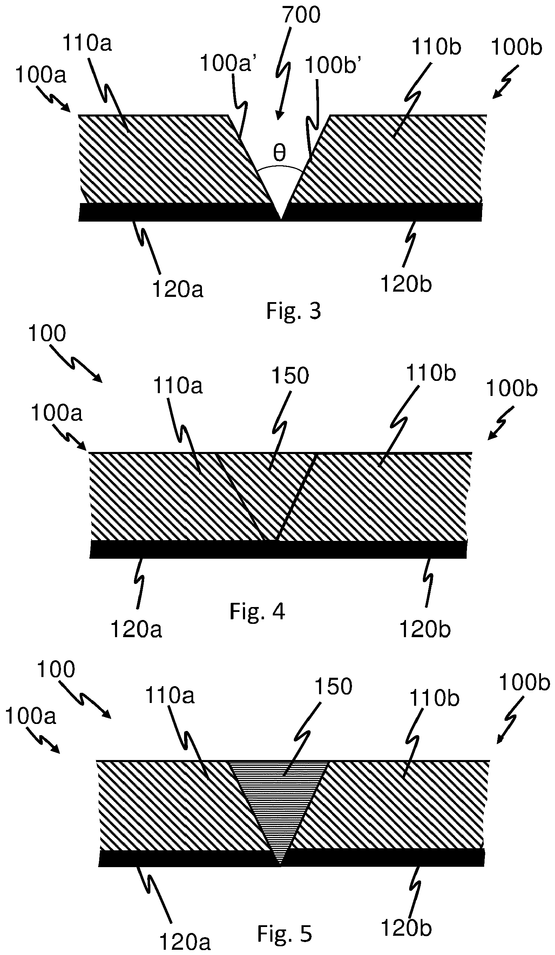

Fig. 3 shows a V butt weld joint before welding while Figs. 4 shows the same V butt weld joint after welding according to a first example and Fig. 5 according a second example.

Further, Fig. 3 shows a part of the first bimetallic tube section 100a and a part of the second bimetallic tube section 100b to be joined. The first bimetallic tube section 100a has a first angled/beveled terminal end 100a' and the second bimetallic tube section 100b has a second angled terminal end 100b'. Before joining, the first angled terminal end 100a' faces and abuts the second angled terminal end 100b' forming a groove 700 having an included angle θ of about 45°. Hence, the first angled terminal end 100a' mirrors the second angled terminal end 100b'.

Fig. 4 shows a first example of the two terminal end sections in Fig. 3 after being joined. As shown, the groove 700 in Fig. 3 has been filled by a filler forming a V-butt welded joint 150.

The filler material of the joint 150 reflects the structure of the first and second bimetallic tube sections 100a, 100b having an inner welded portion comprising an iron based austenitic alloy which corresponds to the materials of the inner tubes 120a,120b of both the first and second bimetallic sections 100a,100b, and further has an outer welded portion comprising a duplex stainless steel corresponding to the materials of the outer tubes 110a, 110b of the first and second bimetallic sections 100a,100b.

Fig. 5 shows a second example of the two terminal end sections in Fig. 3 after being joined. A shown, the groove 700 in Fig. 3 has been filled by a filler forming a V-butt weld joint 150.

In this example the filler material of the welded joint 150 does not reflect the structure of the first and second bimetallic tube sections 100a, 100b. Instead the filler material is a nickel based austenitic alloy.

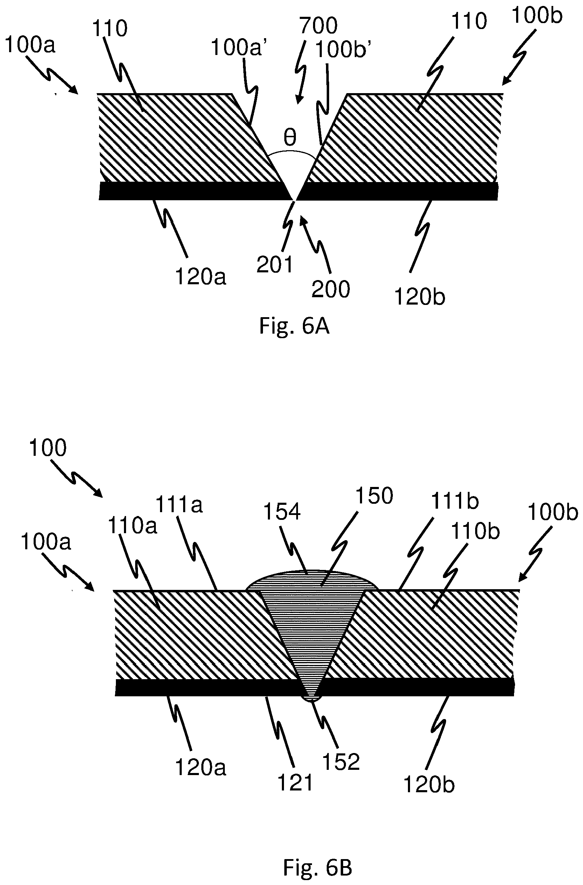

Fig. 6A and 6B illustrate a V butt weld joint according to a second embodiment before and after welding, respectively.

Fig. 6A is different from the embodiment shown in Fig. 3 in that the first angled terminal end 100a' and the second angled terminal end 100b' do not abut but are fairly spaced apart forming a gap 200 between them. Hence, during welding a controlled amount of filler material passes through the gap 200 forming a root 152 as shown in Fig. 6B. The root 152 serves as a reinforcement to the V butt weld joint 150.

The gap 200 may have a minimum root opening 201 between the first and second terminal ends 100a',100b' of between 0.1 and 2.5 mm, preferably between 0.2 and 1.5 mm, such as for example 0.5 mm. The minimum root opening 201 being defined as the area within the gap 200 wherein the distance between the two terminal ends 100a', 100b' is at the smallest. In other words, the root opening 201 is arranged at the narrowest part of the included angle/groove 700.

Looking at Fig. 6B, the root 152 is arranged on the inner surface 121 of the joined bimetallic tube 100 such that the inner diameter of the joined bimetallic tube 100 is smaller at the area comprising the root 152 compared to the average inner diameter of the both the first and second bimetallic tube section 100a, 100b.

Further, as also shown in Fig. 6B, a cap 154 may be arranged on the outer surface of the joined bimetallic tube 100 such that the outer diameter of the joined bimetallic tube 100 is larger at the area comprising the cap 154 compared to the average outer diameter of the both the first and second bimetallic tube section 100a, 100b. The cap 154 also serves as a reinforcement to the joint 150.

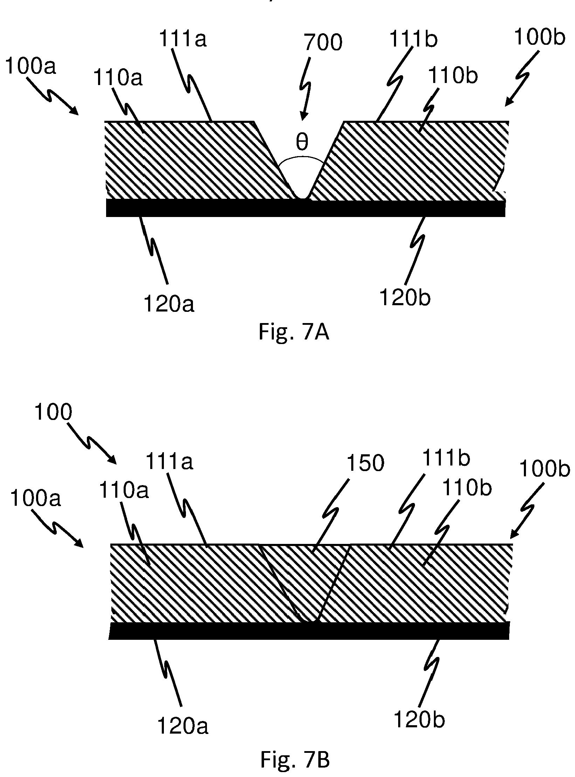

Fig. 7A and 7B shows a U butt weld joint according to a third embodiment before and after welding, respectively.

Looking at Fig. 7A the two terminal ends 100a', 100b' of the outer tubes 110a, 110b of the first and second bimetallic tube sections 100a, 100b are shaped similar to a J, forming a U shaped groove having an included angle θ of about 45°. In the shown embodiment the two terminal ends 100a', 100b' of the inner tubes 120a,120b are not beveled hence not showing an included angle between them. Further, the two terminal ends 100a', 100b' of the inner tubes 120a,120b abut each other.

Fig. 7B shows the U butt weld joint 150 after welding has been completed. The composition filler material of the joint 150 is a nickel based austenitic alloy as shown in Fig. 5.

A person skilled in the art will know that other butt weld joints may be used than the ones disclosed in the drawings herein.

## Claims

1. A subsea composite assembly (1) comprising
at least one cable (2) and
at least one bimetallic tube (100) for transportation of hydrogen,
wherein the bimetallic tube (100) comprises:
- an outer tube (110) of a duplex stainless steel and
- an inner tube (120) of an iron based austenitic alloy.

2. The subsea composite assembly (1) according to claim 1, wherein the inner tube (120) is fixed to the outer tube (110) by metallic bonding.

3. The subsea composite assembly (1) according to claim 1 or 2, wherein the duplex stainless steel comprises from 22 to 32 wt% Cr, preferably 25 wt% Cr.

4. The subsea composite assembly (1) according to any one of the preceding claims, wherein the iron based austenitic alloy comprises at least one of nickel and manganese.

5. The subsea composite assembly (1) according to claim 4, wherein the austenitic alloy comprises from 6 to 31 wt% Ni, preferably 8 to 15wt % Ni.

6. The subsea composite assembly (1) according to claim 4, wherein the austenitic alloy comprises from 6 to 31 wt% Ni and 1 to 10 wt% Mn, preferable 10 to 14 wt% Ni, and preferable 4 to 8 wt% Mn.

7. The subsea composite assembly (1) according to claim 4, wherein the austenitic alloy comprises from 2 to 20 wt% Mn, preferably 4 to 16 wt% Mn.

8. The subsea composite assembly (1) according to any one of the preceding claims, wherein the cable (2) is an electric cable, fiber optic cable or a signal cable.

9. The subsea composite assembly (1) according to any one of the preceding claims, wherein the bimetallic tube (100) comprises a first bimetallic tube section (100a) and a second bimetallic tube section (100b) and a joint (150) therebetween.

10. The subsea composite assembly (1) according to claim 9, wherein the welded joint (150) is any one of an orbital welded joint, gas tungsten arc welded (GTAW) joint or a gas metal arc welded (GMAW) joint.

11. The subsea composite assembly (1) according to claim 10, wherein the joint (150) comprises a filler material reflecting the bimetallic tube structure having an inner filler string comprising an iron based austenitic alloy and an outer filler string comprising a duplex stainless steel.

12. The subsea composite assembly (1) according to any one of claims 9 to 11, wherein the joint further comprise additional material reinforcement of a root (152) and cap (154) such that the bimetallic tube (100) comprises a smaller inner diameter and a lager outer diameter compared to the inner and outer diameter of the first bimetallic tube section (100a), respectively.

13. The subsea composite assembly (1) according to any one of claims, wherein the subsea composite assembly (1) is a subsea umbilical or a subsea bundle.

14. A system for transportation of hydrogen comprising
- a subsea composite assembly (1) comprising at least one cable (2) and at least one bimetallic tube (100),
wherein the bimetallic tube (100) comprises:
- an outer tube (110) of a duplex stainless steel and
- an inner tube (120) of an iron or nickel based austenitic alloy, and
- a hydrogen unit in fluid communication with the inner tube of the bimetallic tube.

15. The system according to claim 14, wherein the subsea composite assembly (1) is in accordance with any one of claims 2 to 13.
